# EUROPÄISCHE PATENTANMELDUNG

(11) **EP 4 756 502 A1**
(43) Veröffentlichungstag der Anmeldung: **10.06.2026**
(21) Anmeldenummer: 25220038.1
(22) Anmeldetag: 02.12.2025
(51) Int. Cl.: G02B 5/08, G01V 7/04, G02B 7/182, G02B 23/06, G21K 1/30, G01M 11/00, G01V 7/14

(54) **LICHTREFLEKTORELEMENT UND ATOMGERÄT**

(30) Priorität: 06.12.2024 DE 102024136457
(71) Anmelder: Deutsches Zentrum für Luft- und Raumfahrt e.V., 53227 Bonn-Oberkassel (DE)
(72) Erfinder: Schubert, Christian, 30167 Hannover (DE); Herr, Waldemar, 30625 Hannover (DE); Grauer, Vanessa Annabelle, 37269 Eschwege (DE); Klempt, Carsten, 30966 Hemmingen (DE)
(74) Vertreter: Günther, Constantin

(57) **Zusammenfassung**

Die Erfindung betrifft ein Lichtreflektorelement, das mehrere Reflektorflächen hat, die in einem oder mehreren vordefinierten Winkeln bezüglich einer vordefinierten Lichteinstrahlrichtung des Lichtreflektorelements ausgerichtet sind, wobei die Reflektorflächen z.B. ringförmig um ein Zentrum des Lichtreflektorelements angeordnet sind, wobei die Reflektorflächen bezüglich des Zentrums des Lichtreflektorelements einander gegenüberliegend angeordnet sind, sodass in Lichteinstrahlrichtung einstrahlendes Licht durch die Reflektorflächen in Lichtstrahlen abgelenkt wird, die in unterschiedlichen Raumrichtungen aufeinander zu verlaufen und sich in einer Zentrumsachse treffen, die in Lichteinstrahlrichtung durch das Zentrum des Lichtreflektorelements hindurch verläuft. Die Zentrumsachse ist somit parallel zur Lichteinstrahlrichtung ausgerichtet. Es können sich dabei die durch die Reflektorflächen abgelenkten Lichtstrahlen mehrerer oder aller Reflektorflächen an demselben Punkt der Zentrumsachse treffen, der dann eine Wechselwirkungszone zum Kühlen gefangener Atome bildet.

Die Erfindung betrifft außerdem ein Atomgerät, z.B. ein Atominterferometer oder ein Quanten-Gradiometer, mit wenigstens einem solchen Lichtreflektorelement. Allgemein betrifft die Erfindung das Gebiet beliebiger Atomgeräte mit Atomfalle und in der Atomfalle lasergekühlten Atomen, insbesondere mit magnetooptischer Falle (MOT - magneto-optical trap). Insbesondere betrifft die Erfindung atominterferometrische Gravimeter sowie damit gebildete Gradiometer.

## Beschreibung

Die Erfindung betrifft ein Lichtreflektorelement, das mehrere Reflektorflächen hat, die in einem oder mehreren vordefinierten Winkeln bezüglich einer vordefinierten Lichteinstrahlrichtung des Lichtreflektorelements ausgerichtet sind, wobei die Reflektorflächen z.B. ringförmig um ein Zentrum des Lichtreflektorelements angeordnet sind, wobei die Reflektorflächen bezüglich des Zentrums des Lichtreflektorelements einander gegenüberliegend angeordnet sind, sodass in Lichteinstrahlrichtung einstrahlendes Licht durch die Reflektorflächen in Lichtstrahlen abgelenkt wird, die in unterschiedlichen Raumrichtungen aufeinander zu verlaufen und sich in einer Zentrumsachse treffen, die in Lichteinstrahlrichtung durch das Zentrum des Lichtreflektorelements hindurch verläuft. Die Zentrumsachse ist somit parallel zur Lichteinstrahlrichtung ausgerichtet. Es können sich dabei die durch die Reflektorflächen abgelenkten Lichtstrahlen mehrerer oder aller Reflektorflächen an demselben Punkt der Zentrumsachse treffen, der dann eine Wechselwirkungszone zum Kühlen gefangener Atome bildet.

Die Erfindung betrifft außerdem ein Atomgerät, z.B. ein Atominterferometer oder ein Quanten-Gradiometer, mit wenigstens einem solchen Lichtreflektorelement. Allgemein betrifft die Erfindung das Gebiet beliebiger Atomgeräte mit Atomfalle und in der Atomfalle lasergekühlten Atomen, insbesondere mit magnetooptischer Falle (MOT - magneto-optical trap). Insbesondere betrifft die Erfindung atominterferometrische Gravimeter sowie damit gebildete Gradiometer.

Atominterferometrische Gravimeter bieten langzeitstabile, absolute Schweremessungen. Ihr Messprinzip bietet im Vergleich zu den verbreiteten Lasergravimetern (FG5X) die Möglichkeit quasi kontinuierlicher Datenaufnahme über einen längeren Zeitraum sowie die Perspektive einer höheren Genauigkeit. Es wurden bereits transportable und kommerzielle Geräte basierend auf atominterferometrischen Messungen realisiert, sowie auch auf einer mobilen Plattform wie einem Schiff betrieben. Ein wesentlicher Bestandteil eines atominterferometrischen Gravimeters ist die Quelle für kalte Atome. Typischerweise basieren diese auf Laserkühlung in magnetooptischen Fallen und Polarisationsgradientenkühlung. Eine dreidimensionale magnetooptische Falle benötigt neben Magnetfeldern auch Lichtfelder, die typischerweise auf den drei Raumachsen jeweils anti-parallel eingestrahlt werden, um eine sogenannte Wechselwirkungszone zum Kühlen gefangener Atome zu bilden. Dies impliziert einen vergleichsweise komplexen Aufbau mit mehreren Strahlformungsoptiken und entsprechenden optischen Zugängen zum Vakuumsystem, in dem die Atome gefangen und gekühlt werden. Speziell ausgelegte Pyramiden- oder Gitterstrukturen wurden erfolgreich dafür verwendet, aus einem einzigen einfallenden Laserstrahl eine Strahlgeometrie zu schaffen, die effektiv in allen drei Raumachsen kühlen kann.

Eine weitere wichtige Anwendung von Atominterferometern ist deren Verwendung für Gradiometer, bei denen zwei räumlich getrennte Gravimeter gleichzeitig betrieben werden. Aus dem Differenzsignal lässt sich die erste Ableitung der Schwerkraft ableiten, der Gravitationsgradient. Für das Differenzsignal ergibt sich eine gemeinsame Rauschunterdrückung (common-noise rejection), bei der das Gradiometersignal nur von technischen Rauschquellen verschlechtert wird, die unterschiedlich auf die beiden Gravimeter wirken. Dabei ist von besonderer Bedeutung, dass die beiden Gravimeter möglichst symmetrisch betrieben werden, um maximal von der beschriebenen Rauschunterdrückung zu profitieren.

Der Stand der Technik in der Gradiometrie mit kompakten Atominterferometern wird durch die Veröffentlichung WO 2014/106811 A2 gut beschrieben. Das dortige Gradiometer besteht aus zwei (oder drei) Wechselwirkungszonen, bei denen jeweils Laserlicht aus allen sechs Raumrichtungen auf ein atomares Ensemble gerichtet wird. Es wird hierzu ein einzelner Laserstrahl eingesetzt, der von zwei (bzw. drei) Lichtreflektorelementen jeweils auf die Wechselwirkungszonen gerichtet wird. Die beiden Lichtreflektorelemente sind so arrangiert, dass das zweite Lichtreflektorelement hinter einer zentralen Bohrung des ersten Lichtreflektorelements liegt (bzw. das dritte Lichtreflektorelement eine zentrale Bohrung für das zweite Lichtreflektorelement hat).

Die technische Herausforderung, die Beschleunigungsmessungen mit kalten Atomen darstellen, ist die Umsetzung von kompakten und widerstandsfähigen Geräten, um trotz anspruchsvoller und dynamischer Umgebungsbedingungen zuverlässige Messdaten zu generieren und hohe Sensitivitäten beizubehalten. Insbesondere für gradiometrische Messungen rücken diese Aspekte aktuell mehr in den Vordergrund und die Anforderungen an die Sensorik hierbei sind hoch.

Aktuelle Umsetzungen zum Kühlen und Fangen der Atomwolken für den späteren Interferometrieprozess beinhalten verschiedene Pyramidenspiegel oder Gitterkonfigurationen der 3-dimensionalen-magnetooptischen Falle (3D-MOT). Diese Arten von 3D-MOTs haben dazu beigetragen, dass Aufbauten für Atominterferometer kompakter sind, da dadurch nur ein Laserstrahl benötigt wird bzw. die Anzahl an notwendigen optischen Zugängen und Fasern deutlich reduziert wird. Die optischen Elemente dazu sind jedoch aufwändig in der Herstellung und können die Notwendigkeit für weitere Elemente im Aufbau implizieren, die zu ungewollten Polarisationseffekten oder Phasenstörungen führen können. Eine Herausforderung dabei ist die gleichmäßige Intensitätsverteilung des Laserlichts in allen drei Raumachsen für die 3D-magnetooptische Falle und Melassekühlung. Diese ist jedoch von großer Bedeutung, da eine ungleiche Verteilung des Lichts die Leistungsfähigkeit der implementierten Laserkühlung beeinflusst und damit die Leistungsfähig des Sensors insgesamt degradieren kann.

Aktuelle Umsetzungen von Pyramiden-MOTs sind meist so konstruiert, dass sie vier der sechs zum effektiven Kühlen nötigen Raumrichtungen durch reflektierende Flächen beleuchten. Die restlichen beiden Richtungen werden jeweils durch das einfallende und in sich reflektierte Laserlichtfeld abgedeckt.

Die typischen Varianten mit Reflexion in einem 90°-Winkel benötigen einen Liquid Crystal Variable Retarder (LCVR) im Retroreflexpfad zum Schalten zwischen MOT-Phase und Interferometriephase bzw. Detektionsphase während des Interferometriezyklus, wenn ein für die Detektion günstiger Energieübergang im Atom getrieben werden soll (z.B. ein sogenannter geschlossener Übergang).

Der Erfindung liegt somit die Aufgabe zugrunde, ein verbessertes Lichtreflektorelement und ein damit gebildetes Atomgerät anzugeben.

Diese Aufgabe wird gemäß Anspruch 1 durch ein Lichtreflektorelement der eingangs genannten Art gelöst, wobei eine, mehrere oder alle Reflektorflächen bezüglich der vordefinierten Lichteinstrahlrichtung des Lichtreflektorelements in einem von 45° abweichenden Winkel ausgerichtet sind. Durch die Reflektorflächen wird das in Lichteinstrahlrichtung eingestrahlte Licht somit nicht orthogonal zur Lichteinstrahlrichtung abgelenkt, sondern in einem schrägen Winkel dazu. Dies kann z.B. als eine Pyramiden-Optik realisiert sein. Durch die optimierte Ablenkrichtung der Reflektorflächen werden einfallende Lichtstrahlen im Winkel in Bezug auf die Flächennormale so abgelenkt, dass insgesamt die vektoriellen Beiträge der Lichtfelder weiterhin alle Raumachsen abdecken, d.h. Komponenten in allen Raumachsen haben, ohne dass das Licht, das das Lichtreflektorelement im Zentrum passiert, für den Betrieb als magnetooptische Falle in sich reflektiert werden muss, d.h. es muss nicht durch einen in Lichteinstrahlrichtung hinter dem Lichtreflektorelement angeordneten Spiegel zurückreflektiert werden. Dies hat den Vorteil, dass kein steuerbares Polarisationselement wie z.B. ein LCVR zum Umschalten zwischen der MOT-Phase und der Interferometrie-Phase bzw. der Detektionsphase während des Interferometriezyklus im Retroreflexpfad benötigt wird, da ein solcher Retroreflexpfad an sich nicht mehr für die magnetooptische Falle benötigt wird. Durch den Entfall des steuerbaren Polarisationselements können Phasenfehler im Atominterferometer durch Wellenfrontstörungen ebenfalls reduziert werden. Es ist zudem möglich, dass Spulen für die magnetooptische Falle an oder in der Vakuumkammer angeordnet werden anstatt um die Vakuumkammer herum.

Die Anwendungsmöglichkeiten des Lichtreflektorelements sind nicht auf Atominterferometer beschränkt. Vorteilhaft ist das Freibleiben eines Zugangs in Lichtstrahlrichtung hinter dem Lichtreflektorelement, an dem kein Spiegel für eine Retroreflexion in Lichteinstrahlrichtung benötigt wird. Dieser Zugang kann z.B. für eine optische Dipolfalle, Detektionsoptiken, einen Atomofen und ähnliches in einem anderen atomoptischen Aufbau verwendet werden.

Gemäß einer vorteilhaften Ausgestaltung der Erfindung ist vorgesehen, dass eine, mehrere oder alle Reflektorflächen bezüglich der vordefinierten Lichteinstrahlrichtung des Lichtreflektorelements in einem Winkel im Bereich von 46° bis 89° ausgerichtet sind, insbesondere in einem Winkel von 67,5° ausgerichtet sind. Allgemein gesagt können die Reflektorflächen in einem Winkel von mehr als 45° ausgerichtet sein. Auf diese Weise erfolgt eine zumindest teilweise Rückstrahlung des in Lichteinstrahlrichtung eingestrahlten Lichts entgegen der Lichteinstrahlrichtung, zumindest mit einer gewissen vektoriellen Komponente in den reflektierten Lichtstrahlen. Dies ermöglicht es, auf den Retroreflexspiegel hinter dem Lichtreflektorelement zu verzichten. Die reflektierten Lichtstrahlen treffen sich somit an einer Position, die in Lichteinstrahlrichtung vor den Reflektorflächen liegt.

Gemäß einer vorteilhaften Ausgestaltung der Erfindung ist vorgesehen, dass eine, mehrere oder alle Reflektorflächen bezüglich der vordefinierten Lichteinstrahlrichtung des Lichtreflektorelements in einem Winkel im Bereich von 1° bis 44° ausgerichtet sind, insbesondere in einem Winkel von 22,5° ausgerichtet sind. In dieser Ausführungsform treffen sich die reflektierten Lichtstrahlen in Lichteinstrahlrichtung hinter den Reflektorflächen. Diese Variante kann für andere Arten von Atomoptiken vorteilhaft eingesetzt werden, z.B. wenn auf der vom Lichtreflektorelement abgewandten Seite in Lichteinstrahlrichtung gesehen eine zweite Lichtquelle vorhanden ist, die das entgegen der Lichteinstrahlrichtung abzustrahlende Licht erzeugt.

Gemäß einer vorteilhaften Ausgestaltung der Erfindung ist vorgesehen, dass mehrere oder alle Reflektorflächen in demselben Winkel bezüglich der vordefinierten Lichteinstrahlrichtung des Lichtreflektorelements ausgerichtet sind. Durch die Reflektorflächen ergibt sich somit ein gleichgerichteter Reflexionssinn entlang der Zentrumsachse, je nach Ausrichtung der Reflektorflächen entweder in Lichteinstrahlrichtung vor den Reflektorflächen oder hinter den Reflektorflächen.

Die Reflektorflächen können in Umfangsrichtung um die Zentrumsachse herum mit gleichmäßigem Winkelabstand zueinander angeordnet sein.

Gemäß einer vorteilhaften Ausgestaltung der Erfindung ist vorgesehen, dass zwischen in Umfangsrichtung benachbarten Reflektorflächen jeweils ein lichttransmittierender Abschnitt angeordnet ist, durch den das in Lichteinstrahlrichtung einfallende Licht durch das Lichtreflektorelement hindurchstrahlen kann. Beim erfindungsgemäßen Lichtreflektorelement wird somit nicht nur, wie im Stand der Technik, ein zentraler Innenbereich des Lichtreflektorelements Licht-transmittierend ausgebildet, sondern es werden alternativ oder zusätzlich Ausschnitte zwischen den Reflektorflächen in Umfangsrichtung geschaffen, die lichttransmittierend sind. Durch eine solche Gestaltung des Lichtreflektorelements können Vorteile erreicht werden:
- Geringere abzudeckende Fläche für den Laserstrahl bei hintereinander angeordneten Lichtreflektorelementen
- Symmetrische Intensitätsverteilung in den Wechselwirkungszonen
- Verbesserte Symmetrien in der Zahl der Atome in den beiden Wechselwirkungszonen
- Entsprechende Verbesserung des Gradiometersignals durch systematische Effekte
- Verkleinerung der Apparatur mit Vorteilen für die Kompaktheit
- Geringere benötigte Laserleistung und damit verringerte Restriktionen für den kompakten Aufbau und die Leistungsaufnahme

Die Erfindung ermöglicht eine verbesserte Konstruktion der Lichtreflektorelemente, bei der die Aufteilung des verfügbaren Laserlichts nicht durch eine radiale bzw. transmittierende, sondern durch eine winkelabhängige Segmentierung der Reflektorflächen erreicht wird. Dies ermöglicht eine Symmetrie der optischen Konfiguration. Gleichzeitig reduziert sich die Komplexität der Lichtreflektorelemente, die nicht zwangsweise aus lichtdurchlässigem Material gefertigt werden müssen und für alle zwei, drei oder mehr Wechselwirkungszonen identisch ausgelegt werden können. Dadurch vereinfacht sich die Fertigung. Die Symmetrie durch Verwendung identischer optischer Elemente reduziert weiterhin differentielle Fehler, die andernfalls die Signalqualität beeinflussen könnten.

Das Lichtreflektorelement kann z.B. mit paarweise angeordneten Reflektorflächen ausgebildet sein. In diesem Fall kann das Lichtreflektorelement wenigstens zwei Paare von Reflektorflächen haben, wobei die Reflektorflächen eines Paares von Reflektorflächen jeweils symmetrisch bezüglich des Zentrums des Lichtreflektorelements einander gegenüberliegend angeordnet sind, sodass in Lichteinstrahlrichtung einstrahlendes Licht durch die Paare von Reflektorflächen in Lichtstrahlen abgelenkt wird, die wenigstens in zwei orthogonal zueinander angeordneten Raumachsen verlaufen und sich in der Zentrumsachse treffen.

Es ist auch möglich das Lichtreflektorelement nicht mit paarweise angeordneten Reflektorflächen auszubilden. Beispielsweise kann das Lichtreflektorelement drei Reflektorflächen, die mit gleichmäßigem Winkelabstand (d.h. 120 Grad) zueinander z.B. ringförmig um das Zentrum des Lichtreflektorelements angeordnet sind.

Die Reflektorflächen sind dazu eingerichtet, Licht zu reflektieren, insbesondere mit einem Reflexionsgrad von im Wesentlichen 100%, wobei bspw. auch eine Reflektivität von >80% hinreichend sein kann. Die Reflektorflächen können z.B. wie Spiegel ausgebildet sein. Die Reflektorflächen können als einheitliche, flächig durchgehende Reflektorflächen oder als eine Vielzahl von Einzelreflektorflächen, die gestaffelt nebeneinander an dem Reflektorelement angeordnet sind, ausgebildet sein. Eine Reflektorfläche kann von einer benachbarten Reflektorfläche dadurch abgegrenzt sein, dass sie in einem anderen Winkel zur benachbarten Reflektorfläche und/oder mit Versatz zur benachbarten Reflektorfläche angeordnet ist. Eine Reflektorfläche kann z.B. als ebene spiegelnde Fläche ausgebildet sein.

Gemäß einer vorteilhaften Ausgestaltung der Erfindung ist vorgesehen, dass einer, mehrere oder alle der lichttransmittierenden Abschnitte als Freiraum ausgebildet ist, in dem kein Material angeordnet ist. Dies hat den Vorteil, dass die Freiräume vorteilhaftere optische Transmissionseigenschaften gegenüber mit Material gefüllten lichttransmittierenden Abschnitten haben. Ferner kann gemäß einer vorteilhaften Ausgestaltung der Erfindung das Lichtreflektorelement besonders einfach gestaltet und mit simplen Verfahren hergestellt werden. Alternativ kann in einem, mehreren oder allen lichttransmittierenden Abschnitten auch ein Füllmaterial angeordnet sein, das lichtdurchlässig ist, z.B. ein Glas- oder Kunststoffmaterial.

Gemäß einer vorteilhaften Ausgestaltung der Erfindung ist vorgesehen, dass die Reflektorflächen in einem Abstand von dem Zentrum angeordnet sind, so dass um das Zentrum herum ein zentraler lichttransmittierender Abschnitt gebildet ist, durch den das in Lichteinstrahlrichtung einfallende Licht durch das Lichtreflektorelement hindurchstrahlen kann. Durch den zentralen lichttransmittierenden Abschnitt kann beispielsweise das Licht der Lichtquelle zu einem in Lichteinstrahlrichtung hinter dem Lichtreflektorelement oder einem dahinter angeordneten weiteren Lichtreflektorelement angeordneten Spiegel geleitet werden, durch den das Licht für die Durchführung der Interferometrie zurückreflektiert wird.

Das Lichtreflektorelement kann mehrteilig aus verschiedenen Einzelteilen zusammengesetzt sein. Beispielsweise können die einzelnen Reflektorflächen als verspiegelte Bauteile auf einem Basisbauteil aufgebracht sein, das als Träger für die Reflektorflächen dient.

Gemäß einer vorteilhaften Ausgestaltung der Erfindung ist vorgesehen, dass das Lichtreflektorelement als ein monolithisches Bauteil ausgebildet ist. Dies erlaubt eine sehr einfache und kostengünstige Herstellung eines Lichtreflektorelements, das zudem mechanisch sehr stabil ist. Dies vereinfacht außerdem die Integration des Lichtreflektorelements in ein Atominterferometer, die Justage wird vereinfacht.

Die eingangs genannte Aufgabe wird außerdem gelöst durch eine Reflektoranordnung, die wenigstens ein erstes Lichtreflektorelement und wenigstens ein zweites Lichtreflektorelement aufweist, wobei das zweite Lichtreflektorelement in Lichteinstrahlrichtung hinter dem ersten Lichtreflektorelement angeordnet ist. Dabei ist das erste Lichtreflektorelement als Lichtreflektorelement der zuvor beschrieben Art ausgebildet, d.h. als erfindungsgemäßes Lichtreflektorelement. Das zweite Lichtreflektorelement kann auch als erfindungsgemäßes Lichtreflektorelement ausgebildet sein, es kann aber auch anders ausgebildet sein. Dabei kann durch die lichttransmittierenden Abschnitte des ersten Lichtreflektorelements hindurchstrahlendes Licht auf die Reflektorflächen des zweiten Lichtreflektorelements treffen. Durch eine solche Reflektoranordnung können vorteilhaft zwei Wechselwirkungszonen eines Quanten-Gradiometers gebildet werden. Dabei ist die erforderliche abzudeckende Fläche für den Laserstrahl relativ gering. Zudem kann eine symmetrische Intensitätsverteilung in den Wechselwirkungszonen auf einfache Weise realisiert werden.

Vorteilhafterweise können das erste und das zweite Lichtreflektorelement hinsichtlich der Dimensionen ihrer optisch wirksamen Reflektorflächen gleich groß gestaltet werden. Vorteilhaft ist ferner, wenn das zweite Lichtreflektorelement in Lichteinstrahlrichtung entlang derselben Zentrumsachse hinter dem ersten Lichtreflektorelement angeordnet ist, also konzentrisch zu dem ersten Lichtreflektorelement angeordnet ist.

Die eingangs genannte Aufgabe wird außerdem gelöst durch ein Atomgerät, insbesondere Atominterferometer, mit wenigstens einer Laserlichtquelle und einer Atomfalle, die wenigstens eine erste Wechselwirkungszone zum Kühlen gefangener Atome durch aus entgegengesetzten Richtungen auf die gefangenen Atome einstrahlendes Laserlicht der Laserlichtquelle hat, wobei das Atomgerät ein erstes Lichtreflektorelement der zuvor erläuterten Art hat, wobei die Lichtabstrahlrichtung der Laserlichtquelle in der vordefinierten Lichteinstrahlrichtung des ersten Lichtreflektorelements ausgerichtet ist, wobei die erste Wechselwirkungszone wenigstens zum Teil durch das erste Lichtreflektorelement gebildet ist. Auch hierdurch können die zuvor erläuterten Vorteile realisiert werden. Das Atomgerät kann ein beliebiges Atomgerät mit in der Atomfalle lasergekühlten Atomen sein. Die Atomfalle kann als magnetooptische Falle (MOT) ausgebildet sein.

Die Atomfalle kann als dreidimensional wirkende Atomfalle (z.B. 3D-MOT) ausgebildet sein, wobei die vektoriellen Anteile des aus entgegengesetzten Richtungen auf die gefangenen Atome einstrahlenden Laserlichts in der ersten Wechselwirkungszone alle Raumachsen umfassen. Auch hierdurch kann der Aufbau des Atomgeräts vereinfacht werden.

Die magnetooptische Falle fungiert dabei als Atomfalle, die dazu eingerichtet ist, eine Atomwolke zu fangen. Die magnetooptische Falle weist eine Magnetfeldvorrichtung auf, um damit einen magnetisch wirksamen Teil der Atomfalle zu realisieren. Ferner weist das Atominterferometer wenigstens eine steuerbare Laserlichtquelle auf, z.B. einen Laser, durch den Licht in der vordefinierten Lichteinstrahlrichtung auf das oder die Lichtreflektorelemente bzw. die Reflektoranordnung abgestrahlt wird. Hierdurch wird die Laserkühlung der gefangenen Atome in der oder den Wechselwirkungszonen realisiert.

Gemäß einer vorteilhaften Ausgestaltung der Erfindung ist vorgesehen, dass die Atomfalle auf der von der Laserlichtquelle abgewandten Seite des ersten Lichtreflektorelements ohne einen entlang der Zentrumsachse verlaufenden Lichtstrahlpfad ausgebildet ist. Dementsprechend kann der Retroreflex-Lichtpfad zumindest für die Kühlung der Atome vermieden werden, wodurch die Phasenfehler im Atominterferometer minimiert werden können und der gesamte Aufbau vereinfacht werden kann, insbesondere kein LCVR oder ähnliches Bauelement für die Steuerung des zurückgestrahlten Lichts erforderlich ist.

Gemäß einer vorteilhaften Ausgestaltung der Erfindung ist vorgesehen, dass das Atomgerät wenigstens zwei Wechselwirkungszonen zum Kühlen gefangener Atome durch aus entgegengesetzten Richtungen auf die gefangenen Atome einstrahlendes Laserlicht hat, wobei das Atomgerät ein zweites Lichtreflektorelement hat, das in Lichteinstrahlrichtung hinter dem ersten Lichtreflektorelement angeordnet ist, wobei eine zweite Wechselwirkungszone wenigstens zum Teil durch das zweite Lichtreflektorelement gebildet ist. Das Atomgerät kann z.B. eine Reflektoranordnung der zuvor beschriebenen Art haben. Das zweite Lichtreflektorelement kann als erfindungsgemäßes Lichtreflektorelement, wie zuvor beschrieben, ausgebildet sein oder als ein anders gestaltetes Lichtreflektorelement, z.B. ein Lichtreflektorelement gemäß dem Stand der Technik. Das Atomgerät kann z.B. als Quanten-Gradiometer ausgebildet sein.

Die Erfindung eignet sich z.B. für Anwendungen im Bereich der Navigation, für Rotations- und Beschleunigungsmessungen, z.B. als Teil einer inertialen Quantenmesseinheit zur Unterstützung oder an Stelle konventioneller inertialen Messeinheiten, insbesondere in Bereichen ohne verlässliches globales Navigationssystem (GNSS).

Im Sinne der vorliegenden Erfindung ist unter dem unbestimmten Begriff "ein" kein Zahlwort zu verstehen. Wenn also z.B. von einem Bauteil die Rede ist, so ist dies im Sinne von "mindestens einem Bauteil" zu interpretieren. Soweit Winkelangaben in Grad gemacht werden, beziehen sich diese auf ein Kreismaß von 360 Grad (360°).

Die Erfindung wird nachfolgend anhand von Ausführungsbeispielen unter Verwendung von Zeichnungen näher erläutert.

### Es zeigen

- Figur 1: ein Lichtreflektorelement in Draufsicht,
- Figur 2: das Lichtreflektorelement gemäß Figur 1 in seitlicher Schnittansicht,
- Figur 3: ein Atomgerät in stark schematisierter seitlicher Schnittansicht,
- Figur 4: eine Reflektoranordnung mit zwei Lichtreflektorelementen in perspektivischer Ansicht.

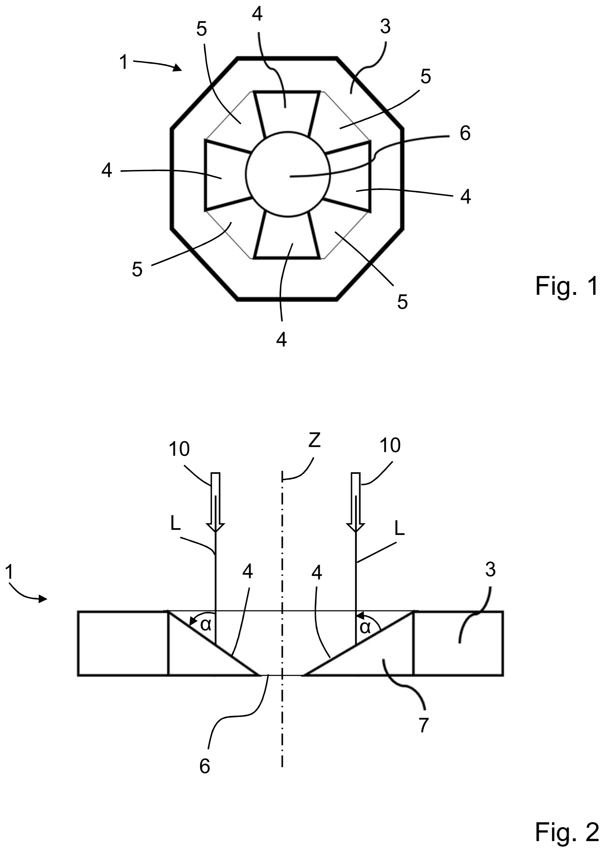

Das Lichtreflektorelement 1 gemäß den Figuren 1, 2 hat einen Basiskörper 3, an dem mehrere über eine Umfangswinkelkoordinate gleichmäßig verteilt angeordnete Reflektorflächen 4 angeordnet sind, die bezüglich einer vordefinierten Lichteinstrahlrichtung L des Lichtreflektorelements 1 schräg in entgegengesetzter Richtung weisen. Die Reflektorflächen 4 sind jeweils als spiegelnde Oberflächen eines Reflektorkörpers 7 ausgebildet. Die Reflektorflächen 4 können jeweils paarweise gegenüberliegend angeordnet sein, d.h. zwei gegenüberliegende Reflektorflächen 4 bilden ein Paar von Reflektorflächen, wobei auch andere Anordnungen denkbar sind. Die Reflektorflächen 4 sind jeweils symmetrisch bezüglich eines Zentrums des Lichtreflektorelements 1 einander gegenüberliegend angeordnet, insbesondere punktsymmetrisch oder spiegelsymmetrisch. Das Zentrum des Lichtreflektorelements 1 wird in Figur 2 durch eine Zentrumsachse Z verdeutlicht. Die Zentrumsachse Z verläuft durch das Zentrum des Lichtreflektorelements 1 in Lichteinstrahlrichtung L.

Jeweils zwischen in Umfangsrichtung um die Zentrumsachse Z benachbarten Reflektorflächen 4 kann sich ein lichttransmittierender Abschnitt 5 befinden, der z.B. als Freiraum ausgebildet sein kann, in dem kein Material angeordnet ist. Alternativ können die Bereiche 5 auch mit dem Material des Basiskörpers 3 oder einem anderen Material ausgefüllt sein. Die Reflektorflächen 4 erstrecken sich in radialer Richtung nicht bis zur Zentrumsachse Z, sondern enden in einem Abstand von der Zentrumsachse Z, sodass um die Zentrumsachse Z herum ein zentraler lichttransmittierender Abschnitt 6 gebildet ist. Der zentrale lichttransmittierende Abschnitt 6 kann als Freiraum ausgebildet sein kann, in dem kein Material angeordnet ist.

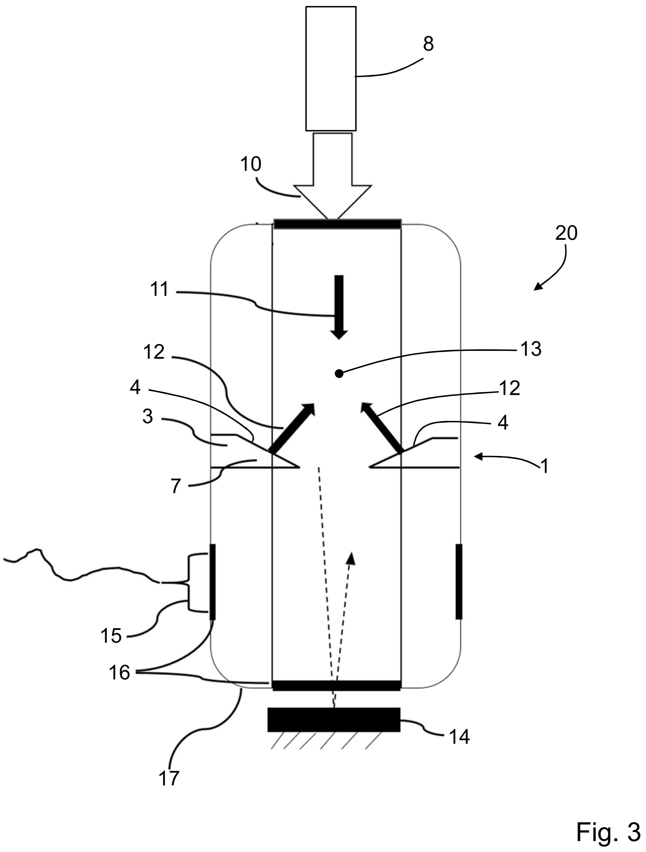

Wie man insbesondere in der Figur 2 erkennt, sind die Reflektorflächen 4 im Unterschied zum Stand der Technik bezüglich der vordefinierten Lichteinstrahlrichtung L in einem von 45° abweichenden Winkel α ausgerichtet, z.B. in einem Winkel von 67,5°. Dies hat zur Folge, dass die in Lichteinstrahlrichtung L eintreffenden Lichtstrahlen 10 durch die jeweilige Reflektorfläche 4 nicht in einem 90°-Winkel in Richtung der Zentrumsachse Z abgelenkt werden, sondern in einem dazu schrägen Winkel, sodass die reflektierten Lichtstrahlen eine vektorielle Komponente entgegengesetzt zum einfallenden Licht 10 haben. Dies wird nachfolgend anhand der Figur 3 noch weiter erläutert. Wenn der Winkel α einen Wert von 67,5° hat, werden die an der Reflektorfläche 4 reflektierten Lichtstrahlen im Winkel von 45° zurückreflektiert.

Die Figur 3 zeigt ein Atomgerät 20, z.B. ein Atominterferometer. Das Atomgerät 20 hat eine kohärente Lichtquelle 8, z.B. einen Laser, durch den das Licht 10 in der Lichteinstrahlrichtung L abgestrahlt wird. Das Atomgerät 20 hat ferner eine Vakuumkammer 17, in der ein Lichtreflektorelement 1 der zuvor beschriebenen Art angeordnet ist. Man erkennt, dass der Wellenvektor 11 des einfallenden Lichts 10, der in Lichteinstrahlrichtung L in Bezug auf das Lichtreflektorelement 1 ausgerichtet ist, auf eine Wechselwirkungszone 13 gerichtet ist, in der Atome in einer Atomfalle gefangen und durch das Laserlicht gekühlt werden können. Zusätzlich ist durch Wellenvektoren 12 die Richtung des an den Reflektorflächen 4 reflektierten Lichts der Lichtquelle 8 dargestellt. Durch die vom 45°-Winkel abweichende, schräge Ausrichtung der Reflektorflächen 4 haben die Wellenvektoren 12 eine Komponente entgegengesetzt zum Wellenvektor 11 und sind ebenfalls auf die Wechselwirkungszone 13 ausgerichtet. Auf diese Weise treten in der Wechselwirkungszone 13 vektorielle Lichtkomponenten in allen sechs Raumrichtungen auf, sodass mit dem einen Lichtreflektorelement 1 bereits eine dreidimensional wirkende Atomfalle realisiert werden kann, ohne dass dafür eine Reflexion durch einen Spiegel hinter dem Lichtreflektorelement 1 notwendig ist. Auf diese Weise ist eine dreidimensionale Laserkühlung der Atome mit geringem Aufwand möglich.

Durch das Lichtreflektorelement 1 mit seinen schräg, d.h. abweichend vom 45°-Winkel, ausgerichteten Reflektorflächen 4 wird das eingestrahlte Licht so reflektiert, dass der Wellenvektor sowohl eine Komponente antiparallel zum einfallenden Lichtfeld-Wellenvektor 11 als auch eine Komponente senkrecht dazu hat. Durch die Ausführung des Lichtreflektorelements 1 erlaubt die Optik einen gleichförmigen Lichtdruck auf die Atome in Richtung der Lichteinstrahlrichtung L und entgegengesetzt zur Lichteinstrahlrichtung L.

Für die nachfolgende Durchführung eines Interferometriezyklus können die in der Atomfalle, d.h. der Wechselwirkungszone 13 gefangenen Atome dann ausgekoppelt werden und fallen beispielsweise in der Vakuumkammer 17 nach unten. Die Vakuumkammer 17 kann optisch transparente Schaugläser bzw. View Ports enthalten, durch die dann mittels z.B. einer Kamera oder einer Fotodiode die Auswertung der Interferometrieausgänge erfolgen kann. Zudem kann auf der der Lichtquelle 8 abgewandten Seite der Vakuumkammer 17 ein Spiegel 14 für die Interferometrie vorhanden sein. Ein Detektionssystem 15 für die Auswertung der Interferometrieausgänge kann z.B. vor einem View Port 16 platziert werden.

Denkbar wären beispielsweise auch statt der dargestellten vier Reflektorelemente 4 in der um 90°-versetzten Anordnung nur drei Elemente, die um 120° zueinander versetzt sind, oder auch sechs Reflektorelemente 4 in einer um 60°-versetzten Anordnung.

Der Spiegel 14 kann auch innerhalb der Vakuumkammer 17 montiert sein. Denkbar ist auch eine Montage des Spiegels 14 auf einem ferngesteuerten Spiegelhalter, wodurch der reflektierte Anteil des Lichtfelds durch automatische Steuerung so verkippt werden kann, dass die Auswirkung auf die magnetooptische Falle reduziert werden kann. Eine weitere Alternative zur Minimierung seiner Auswirkung auf die magnetooptische Falle ist die Anordnung z.B. eines Shutters zwischen dem unteren Schauglas 16 und dem Spiegel 14.

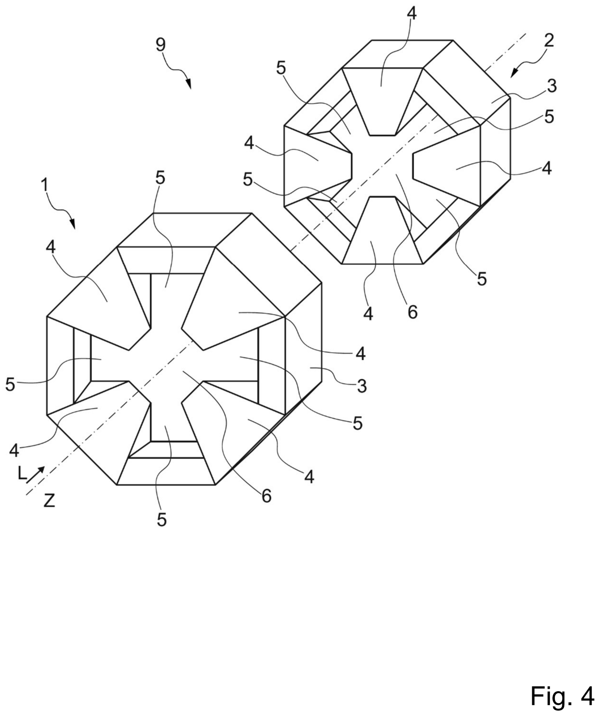

Das beschriebene Ausführungsbeispiel der Optik ermöglicht ebenfalls einen Aufbau mit zwei hintereinander angeordneten Lichtreflektorelementen 1, 2, die eine Reflektoranordnung 9 bilden, wie nachfolgend anhand der Figur 4 erläutert wird. Mit einer solchen Reflektoranordnung 9 kann z.B. ein Quanten-Gradiometer realisiert werden, sodass eine Messung des Gravitationsgradienten mit einer Lichtquelle 8 realisierbar ist.

Die Figur 4 zeigt eine Reflektoranordnung 9 mit zwei Lichtreflektorelementen 1, 2, die in einer vordefinierten Lichteinstrahlrichtung L der Lichtreflektorelemente 1, 2 hintereinander angeordnet sind. In Lichteinstrahlrichtung L befindet sich zunächst ein erstes Lichtreflektorelement 1 und dahinter ein zweites Lichtreflektorelement 2.

Die Lichtreflektorelemente 1, 2 haben jeweils einen Basiskörper 3, an dem mehrere über eine Umfangswinkelkoordinate gleichmäßig verteilt angeordnete Reflektorflächen 4 angeordnet sind, die in Richtung entgegengesetzt zur Lichteinstrahlrichtung L weisen. Die Lichtreflektorelemente 1, 2 können z.B. wie anhand der Figuren 1, 2 beschrieben ausgebildet sein. Die Zentrumsachse Z verläuft durch das Zentrum beider Lichtreflektorelemente 1, 2 in Lichteinstrahlrichtung L. Die Lichtreflektorelemente 1, 2 sind somit konzentrisch zueinander angeordnet.

Das zweite Lichtreflektorelement 2 kann um einen Winkel von 45° um die Zentrumsachse Z gegenüber dem ersten Lichtreflektorelement 1 gedreht angeordnet sein. Dies ermöglicht es, dass in Lichteinstrahlrichtung L einstrahlendes Licht, das durch die lichttransmittierenden Abschnitte 5 des ersten Lichtreflektorelements 1 hindurchstrahlt, genau auf die Reflektorflächen 4 des zweiten Lichtreflektorelements 2 trifft.

## Patentansprüche

1. Lichtreflektorelement (1, 2), das mehrere Reflektorflächen (4) hat, die in einem oder mehreren vordefinierten Winkeln bezüglich einer vordefinierten Lichteinstrahlrichtung (L) des Lichtreflektorelements (1, 2) ausgerichtet sind, wobei die Reflektorflächen (4) um ein Zentrum des Lichtreflektorelements (1, 2), z. B. ringförmig, angeordnet sind, wobei die Reflektorflächen (4) bezüglich des Zentrums des Lichtreflektorelements (1, 2) einander gegenüberliegend angeordnet sind, sodass in Lichteinstrahlrichtung (L) einstrahlendes Licht durch die Reflektorflächen (4) in Lichtstrahlen (L2', L3') abgelenkt wird, die in unterschiedlichen Raumrichtungen aufeinander zu verlaufen und sich in einer Zentrumsachse (Z) treffen, die in Lichteinstrahlrichtung (L) durch das Zentrum des Lichtreflektorelements (1, 2) hindurch verläuft, **dadurch gekennzeichnet, dass** eine, mehrere oder alle Reflektorflächen (4) bezüglich der vordefinierten Lichteinstrahlrichtung (L) des Lichtreflektorelements (1, 2) in einem von 45° abweichenden Winkel ausgerichtet sind.

2. Lichtreflektorelement nach Anspruch 1, **dadurch gekennzeichnet, dass** eine, mehrere oder alle Reflektorflächen (4) bezüglich der vordefinierten Lichteinstrahlrichtung (L) des Lichtreflektorelements (1, 2) in einem Winkel im Bereich von 46° bis 89° ausgerichtet sind, insbesondere in einem Winkel von 67,5° ausgerichtet sind.

3. Lichtreflektorelement nach Anspruch 1, **dadurch gekennzeichnet, dass** eine, mehrere oder alle Reflektorflächen (4) bezüglich der vordefinierten Lichteinstrahlrichtung (L) des Lichtreflektorelements (1, 2) in einem Winkel im Bereich von 1° bis 44° ausgerichtet sind, insbesondere in einem Winkel von 22,5° ausgerichtet sind.

4. Lichtreflektorelement nach einem der vorhergehenden Ansprüche, **dadurch gekennzeichnet, dass** mehrere oder alle Reflektorflächen (4) in demselben Winkel bezüglich der vordefinierten Lichteinstrahlrichtung (L) des Lichtreflektorelements (1, 2) ausgerichtet sind.

5. Lichtreflektorelement nach einem der vorhergehenden Ansprüche, **dadurch gekennzeichnet, dass** zwischen in Umfangsrichtung benachbarten Reflektorflächen (4) jeweils ein lichttransmittierender Abschnitt (5) angeordnet ist, durch den das in Lichteinstrahlrichtung (L) einfallende Licht durch das Lichtreflektorelement (1, 2) hindurchstrahlen kann.

6. Lichtreflektorelement nach Anspruch 4, **dadurch gekennzeichnet, dass** einer, mehrere oder alle der lichttransmittierenden Abschnitte (5) als Freiraum ausgebildet ist, in dem kein Material angeordnet ist.

7. Lichtreflektorelement nach einem der vorhergehenden Ansprüche, **dadurch gekennzeichnet, dass** die Reflektorflächen (4) in einem Abstand von dem Zentrum angeordnet sind, so dass um das Zentrum herum ein zentraler lichttransmittierender Abschnitt (6) gebildet ist, durch den das in Lichteinstrahlrichtung (L) einfallende Licht durch das Lichtreflektorelement (1, 2) hindurchstrahlen kann.

8. Lichtreflektorelement nach einem der vorhergehenden Ansprüche, **dadurch gekennzeichnet, dass** das Lichtreflektorelement (1, 2) als ein monolithisches Bauteil ausgebildet ist.

9. Lichtreflektorelement nach einem der vorhergehenden Ansprüche, **dadurch gekennzeichnet, dass** eine, mehrere oder alle der Reflektorflächen (4) jeweils als ebene Fläche ausgebildet ist.

10. Atomgerät (20), insbesondere Atominterferometer, mit wenigstens einer Laserlichtquelle (8) und einer Atomfalle, die wenigstens eine erste Wechselwirkungszone (13) zum Kühlen gefangener Atome durch aus entgegengesetzten Richtungen auf die gefangenen Atome einstrahlendes Laserlicht der Laserlichtquelle (8) hat, **dadurch gekennzeichnet, dass** das Atomgerät (20) ein erstes Lichtreflektorelement (1) nach einem der vorhergehenden Ansprüche hat, wobei die Lichtabstrahlrichtung der Laserlichtquelle (8) in der vordefinierten Lichteinstrahlrichtung (L) des ersten Lichtreflektorelements (1, 2) ausgerichtet ist, wobei die erste Wechselwirkungszone (13) wenigstens zum Teil durch das erste Lichtreflektorelement (1) gebildet ist.

11. Atomgerät nach Anspruch 10, **dadurch gekennzeichnet, dass** die Atomfalle als dreidimensional wirkende Atomfalle ausgebildet ist, wobei die vektoriellen Anteile des aus entgegengesetzten Richtungen auf die gefangenen Atome einstrahlenden Laserlichts in der ersten Wechselwirkungszone (13) alle Raumachsen umfassen.

12. Atomgerät nach Anspruch 10 oder 11, **dadurch gekennzeichnet, dass** die Atomfalle auf der von der Laserlichtquelle (8) abgewandten Seite des ersten Lichtreflektorelements (1) ohne einen entlang der Zentrumsachse (Z) verlaufenden Lichtstrahlpfad ausgebildet ist.

13. Atomgerät nach einem der Ansprüche 10 bis 12, insbesondere Quanten-Gradiometer, **dadurch gekennzeichnet, dass** das Atomgerät (20) wenigstens zwei voneinander beabstandete Wechselwirkungszonen (13) zum Kühlen gefangener Atome durch aus entgegengesetzten Richtungen auf die gefangenen Atome einstrahlendes Laserlicht hat, wobei das Atomgerät ein zweites Lichtreflektorelement (2) hat, das in Lichteinstrahlrichtung (L) hinter dem ersten Lichtreflektorelement (1) angeordnet ist, wobei eine zweite Wechselwirkungszone (13) wenigstens zum Teil durch das zweite Lichtreflektorelement (2) gebildet ist.
